# FASCICULE DE BREVET EUROPEEN

(11) **EP 1 998 920 B1**
(45) Date de publication et mention de la délivrance du brevet: **16.09.2009**
(21) Numéro de dépôt: 07719194.8
(22) Date de dépôt: 26.03.2007
(51) Int. Cl.: B23C 5/04

(54) **OUTIL DE COUPE EN CARBURE ET PROCEDE DE FABRICATION D'UN TEL OUTIL**
HARTMETALLSCHNEIDWERKZEUG UND VERFAHREN ZUR HERSTELLUNG EINES SOLCHEN WERKZEUGS
CARBIDE CUTTING TOOL AND METHOD OF MAKING SUCH A TOOL

(30) Priorité: 28.03.2006 EP 06447042
(43) Date de publication de la demande: 10.12.2008
(73) Titulaire: Precicarb, 4800 Verviers (BE)
(72) Inventeur: KERF, Gérard, B-4837 Baelen (BE)
(74) Mandataire: pronovem
(86) Numéro de dépôt international: PCT/BE2007/000029
(87) Numéro de publication internationale: WO 2007/109866

(56) Documents cités:
- US-A- 2 212 012
- US-A- 5 253 561

## Description

### Objet de l'invention

La présente invention se rapporte à un outil de coupe à couteaux ou lames présentant une résistance renforcée à l'usure, en particulier pour la découpe en granules de toute matière synthétique ou minérale en fil (plastique, fibre de verre, etc.), enrobée ou non, avant son utilisation comme matière première.

L'invention concerne un outil de coupe rotatif présentant plusieurs arêtes tranchantes individuelles disposées régulièrement ou non autour d'un axe.

L'invention se rapporte également à un procédé de fabrication d'un tel outil.

### Etat de la technique et position du problème

Dans la fabrication ou le recyclage de matières plastiques par exemple, on connaît des granulateurs comportant une extrudeuse ou une bobine, qui fonctionnent selon le principe du hachoir. Dans le cas de l'extrudeuse, la matière plastique est chauffée et la masse fondue poussée au travers d'un disque à trous.

Les fils sortant sont alors coupés en granules par des lames rotatives. Les arêtes tranchantes de ces lames sont généralement hélicoïdales pour une meilleure répartition de l'effort et pour éviter les vibrations, les fils étant alors coupés successivement et non simultanément.

L'état de la technique propose de nombreuses applications de couteaux de ce type à affûtage hélicoïdal des lames. Celles-ci peuvent être usinées dans la masse, c'est-à-dire que la pièce est monobloc, en acier rapide fortement allié ou fritté, de dureté Rockwell C au moins supérieure à 60 (par exemple GB-A-2 364 007, FR-A-2 301 327, GB-A-923 087, JP-A-2000/107925). Elles peuvent encore de présenter sous forme de plaquettes réalisées en un matériau de résistance renforcée à l'usure, tel que le carbure de tungstène, l'acier rapide ou la céramique, éventuellement revêtus. Dans ce cas, les plaquettes de coupe sont solidarisées au corps de l'outil de coupe par brasage, sertissage ou clamage, collage non-métallique, etc. (par exemple US-A-5,586,843, GB-A-1 334 676, GB-A-2 116 094).

Commercialement, on trouve sur le marché des outils de coupe et contre-lames de ce type, de diamètre allant de 50 à 200 mm et de longueur allant de 50 à 600 mm, soit monobloc en acier traité ou alliages spéciaux, soit à plaquettes brasées en carbure.

Dans le cas des granulateurs précités utilisés en production, il est nécessaire de remplacer les outils de coupe monobloc usée jusqu'à plusieurs fois par jour, ce qui multiplie les temps d'arrêt de l'outil de production et grève la productivité (jusqu'à plusieurs heures d'arrêt par jour). L'utilisation de carbure, particulièrement sous forme d'outils monobloc, permet d'augmenter de 5 à 10 fois la durée de vie de l'outil de coupe. Cependant les outils monobloc obtenus par frittage sont coûteux et la détérioration d'une seule lame implique le remplacement de l'outil complet.

De plus, dans le cas des outils de coupe pour granulateurs, les couteaux à arêtes tranchantes hélicoïdales sont disposés axialement sur toute la longueur du corps cylindrique support.. Le positionnement et la solidarisation de lames individuelles sur celui-ci sont des opérations extrêmement délicates au vu de la tolérance à respecter pour l'affûtage final, à plus forte raison pour des lames hélicoïdales.

Le document US-A-2,212,012 divulgue des couteaux rotatifs présentant des lames individuelles insérées dans des rainures usinées à la surface extérieure de ces couteaux. Les lames et les rainures correspondantes ont une base rectiligne. La section des lames est essentiellement rectangulaire, l'affûtage étant hélicoïdal.

Le document FR-A-1 278 615 divulgue une fraise constituée d'une pièce cylindrique munie de rainures fraisées droites inclinées par rapport à la génératrice du cylindre, dans lesquelles sont logées des lames en forme de baguettes. Les tranchants sont répartis régulièrement sur le pourtour du corps de fraise.

Le document DE 10 2004 017 714 A1 décrit un outil de fraisage présentant des rainures rectilignes orientées de manière oblique par rapport à l'axe de l'outil. Les lames sont fixées à l'outil au moyen de pièces de blocage longitudinales bloquées au moyen de vis.

### Buts de l'invention

La présente invention vise à fournir une solution qui permette de s'affranchir des inconvénients de l'état de la technique.

En particulier, l'invention vise à fournir un outil de coupe pour granulateur dont la durée de vie en utilisation est augmentée significativement.

L'invention vise encore à fournir un outil de coupe qui soit meilleur marché que les outils de l'état de la technique en termes de fabrication et de réparation.

L'invention a encore pour but de fournir un procédé simple et économique de fabrication et d'affûtage de l'outil de coupe selon l'invention.

### Principaux éléments caractéristiques de l'invention

Un premier aspect de la présente invention concerne un outil de coupe rotatif présentant un mandrin de support cylindrique et plusieurs lames individuelles à arêtes tranchantes essentiellement radiales, affûtées hélicoïdalement et disposées régulièrement sur la surface extérieure du mandrin, chaque lame comportant une base rectiligne qui vient s'insérer dans une rainure de même forme que ladite base, chaque lame individuelle étant montée fixée mécaniquement au mandrin, **caractérisé en ce qu**'il comporte en outre deux couvercles fixés aux bases respectives du mandrin pour renforcer la fixation des lames.

Selon une première modalité d'exécution préférée de l'invention, la base est essentiellement rectangulaire ou a la forme d'un parallélogramme et la rainure est respectivement de section rectangulaire ou en parallélogramme.

Avantageusement, la fixation mécanique des lames au mandrin est obtenue par vissage, serrage, brasage, frettage, sertissage ou collage.

De préférence encore, les lames sont montées vissées au mandrin au moyen de vis à tête tronconique.

De préférence encore, le mandrin présente des supports de lame munis de rainures transversales espacées régulièrement pour le positionnement des vis.

Avantageusement, les vis sont disposées régulièrement le long des lames, dans les rainures des supports de lame, de manière à les bloquer au moyen des têtes de vis dans les rainures rectilignes correspondantes.

Toujours selon l'invention les lames s'étendent sur toute la longueur du mandrin avec un profil tranchant monotone et régulier, dépourvu de dents sur toute la longueur des lames.

Selon une forme d'exécution préférée de l'invention, les rainures usinées dans le mandrin sont inclinées d'un angle compris entre 0° et 15°, et de préférence entre 5° et 15°, par rapport à l'axe du mandrin.

Avantageusement, les lames sont en carbure cémenté à base de carbure de tungstène, en acier rapide ou à haute résistance, en diamant, en céramique ou en cermet, éventuellement revêtus de nitrure de titane, nitrure d'aluminium de titane ou carbonitrure de titane, nitrure de chrome mono- ou multicouches.

Toujours avantageusement, le mandrin est en acier inoxydable.

Selon une modalité d'exécution particulièrement avantageuse, chaque lame comporte au moins deux arêtes tranchantes parallèles à affûtage hélicoïdal.

De préférence, les lames ont au moins une extrémité tronconique qui coopère, lors de la fixation, avec un cône inversé usiné dans le couvercle correspondant.

De préférence encore, au moins un des deux couvercles est fendu radialement et présente un orifice de vissage entre deux fentes quelconques, de manière telle qu'il y ait au maximum deux arêtes tranchantes entre deux fentes quelconques.

Selon une deuxième modalité d'exécution préférée de l'invention, la rainure précitée est de section trapézoïdale, la grande base du trapèze étant plus proche de l'axe du mandrin que la petite base.

Avantageusement, le mandrin présente des pièces de blocage amovibles, se présentant sous forme de barrettes ayant la même longueur que les lames, pouvant être disposées axialement le long de celles-ci et formant les rainures lorsqu'elles sont en position, lesdites pièces de blocage comportant des logements pour l'insertion de vis de fixation sur le mandrin.

De préférence, chaque pièce de blocage est configurée pour la fixation de deux lames adjacentes.

Un second aspect de la présente invention concerne un procédé de fabrication d'un outil de coupe rotatif selon l'une quelconque des revendications précédentes, caractérisé au moins par les étapes successives suivantes :
- on usine des ébauches de lames à base rectiligne ;
- on positionne les ébauches de lames à base rectiligne dans les rainures correspondantes usinées dans le mandrin ;
- on fixe mécaniquement les ébauches de lames au mandrin, de préférence au moyen de vis à tête tronconique, ainsi que les couvercles ;
- on usine les ébauches de lames pour obtenir des lames finies dont l'affûtage hélicoïdal satisfait à des tolérances globales prédéterminées de l'outil de coupe.

### Brève description des figures

La figure 1 représente une vue éclatée en perspective de l'outil de coupe selon une forme d'exécution préférée de la présente invention.

Les figures 2A et 2B représentent respectivement une vue en élévation et une vue en coupe du mandrin de support de l'outil de coupe selon la figure 1.

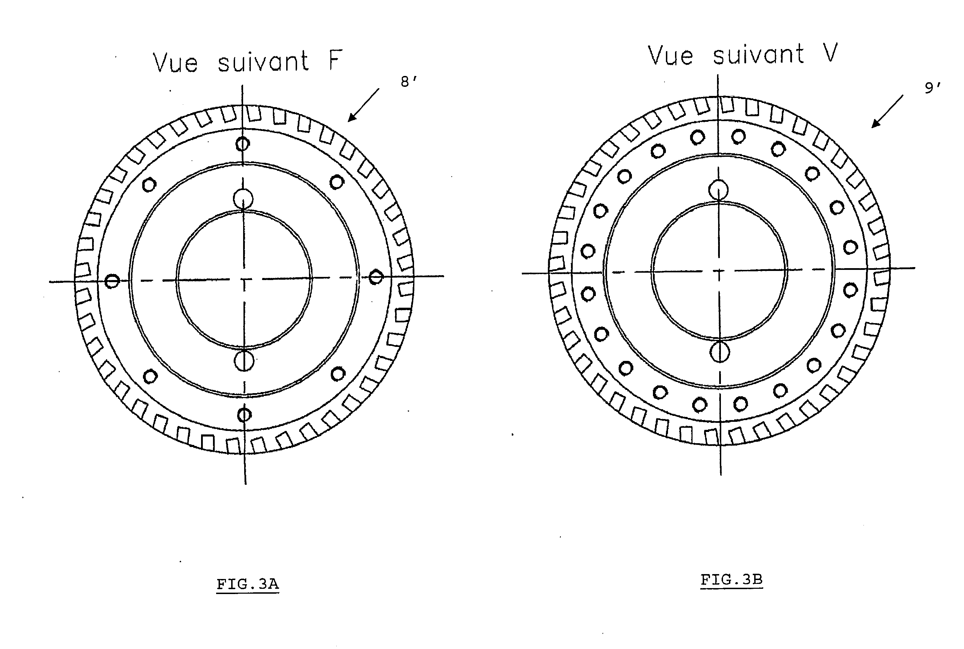

Les figures 3A et 3B représentent des vues respectives des bases du mandrin précité.

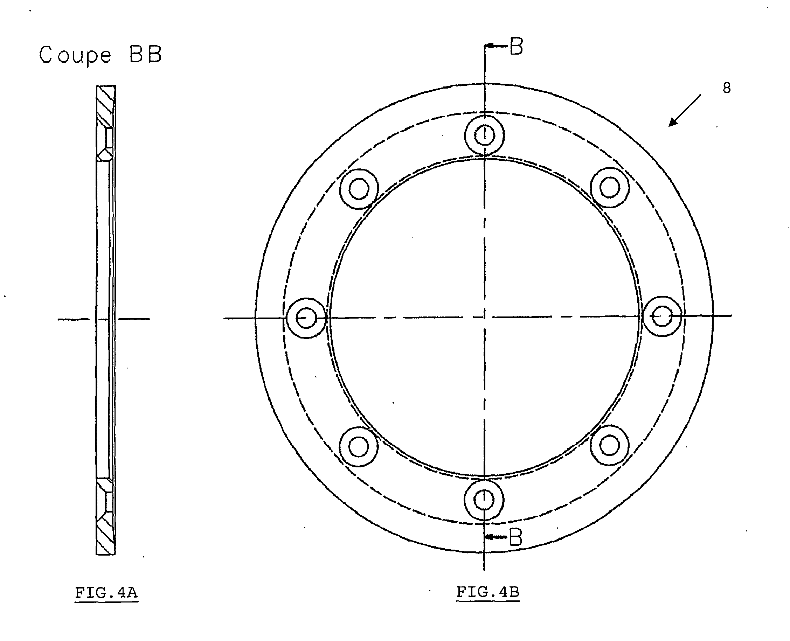

Les figures 4A et 4B représentent respectivement une vue en coupe et une vue en plan du couvercle correspondant à la base de la figure 3A.

Les figures 5A et 5B représentent respectivement une vue en coupe et une vue en plan du couvercle correspondant à la base de la figure 3B.

### Description de formes d'exécution préférées de l'invention

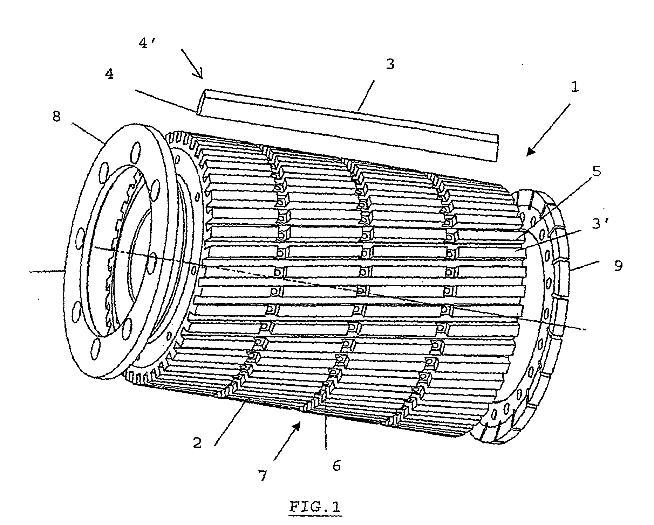

Comme représenté sur la figure 1, l'outil de coupe 1 selon une première forme d'exécution préférée de l'invention comprend un mandrin cylindrique 2 porte-lames, réalisé par exemple en acier courant ou acier inoxydable. Les lames 3, par contre, sont réalisées dans une matière présentant une grande résistance à l'usure, comme par exemple le carbure de tungstène (WC), la céramique, l'acier rapide, etc., éventuellement revêtus de nitrure de titane (TiN), carbonitrure de titane (TiCN), nitrure d'aluminium de titane (TiAlN), nitrure de chrome (CrN), etc.

Les lames brutes ou ébauches (non représentées) se présentent essentiellement sous forme de parallélépipèdes rectangles ou de barreaux à base rectiligne affûtés grossièrement et sont fixées sur la surface latérale du mandrin cylindrique 2 dans des rainures 5 par un moyen mécanique, par exemple par blocage au moyen de vis à tête tronconique 6. Les lames 3 sont orientées parallèlement les unes aux autres selon un angle d'environ 10 degrés par rapport à l'axe du cylindre 2. Cette inclinaison permettra aux lames à affûtage de finition hélicoïdal d'avoir un angle d'hélice plus grand que des lames disposées axialement.

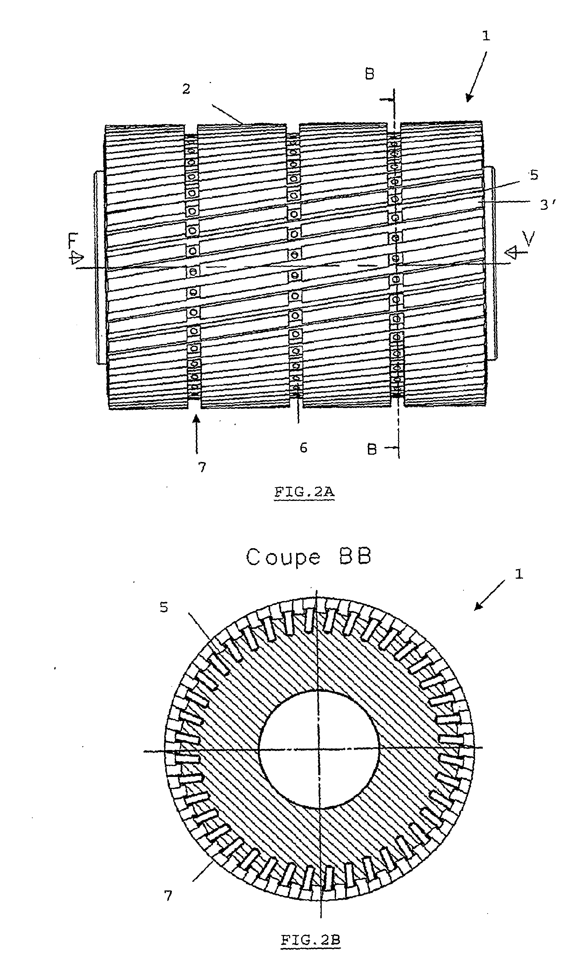

Le mandrin 2 est pourvu d'une pluralité de rainures rectilignes 5, à fond plat, permettant la fixation des ébauches de lames 3, dont la base 4 est de forme correspondante, c'est-à-dire rectangulaire ou en parallélogramme (figures 1, 2A et 2B). Une fois celles-ci fixées au mandrin, on peut alors réaliser facilement l'affûtage de finition des lames selon les tolérances requises.

Entre les rainures, le mandrin 2 présente ainsi des supports de lame 3' présentant eux-mêmes une pluralité de rainures transversales 7, par exemple au nombre de trois, espacées régulièrement et permettant l'introduction des vis coniques 6 précitées.

L'invention n'est pas limitée à une fixation par vis des ébauches de lames, mais tout moyen mécanique tel que sertissage, serrage, frettage à chaud, clamage, brasage, collage, etc., peut être envisagé dans les limites de l'invention.

De manière avantageuse, les ébauches de lames 3 et le mandrin 2 peuvent être dimensionnés de manière telle que, sur la largeur des rainures rectilignes 5 usinées dans le mandrin, on peut insérer une lame comportant deux arêtes tranchantes (non représenté).

Selon une modalité préférée de l'invention, la fixation des lames 3 est renforcée par la fixation additionnelle de deux couvercles 8, '9 à cônes inversés par rapport aux bases 8', 9' du mandrin 2.

Les lames 3 ont dès lors au moins une extrémité tronconique 4' qui coopère, lors de la fixation de l'ensemble, avec un cône inversé usiné dans le couvercle 8 correspondant.

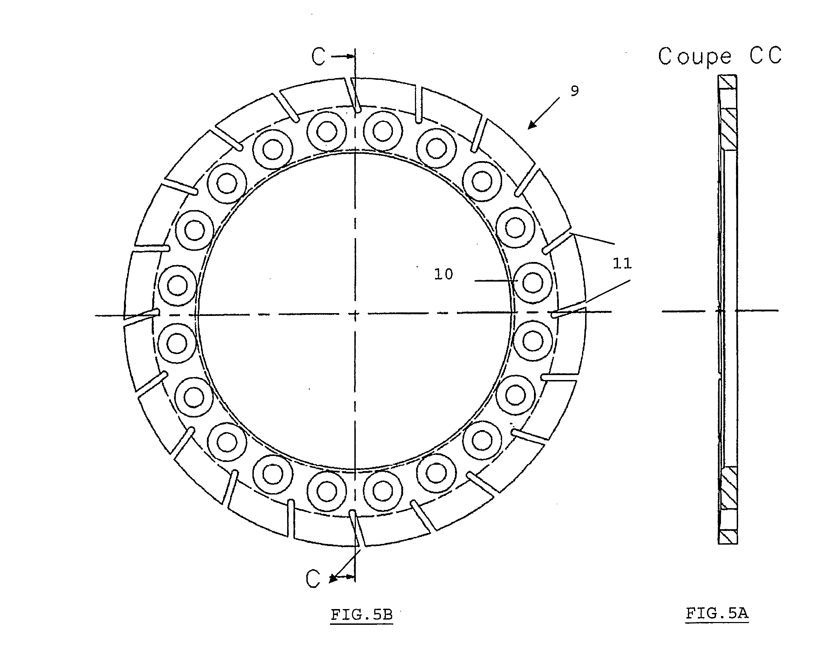

Afin de reprendre toute la longueur des lames, au moins un des deux couvercles (couvercle 9, figures 1 et 5B) est fendu radialement et présente un orifice de vissage 10 entre deux fentes 11 quelconques, de manière telle qu'il y ait au maximum deux lames entre deux fentes, vu ce qui est précisé plus haut. Ces dispositions permettent de s'opposer à la sortie du couteau en rotation, sous l'action de la force centrifuge.

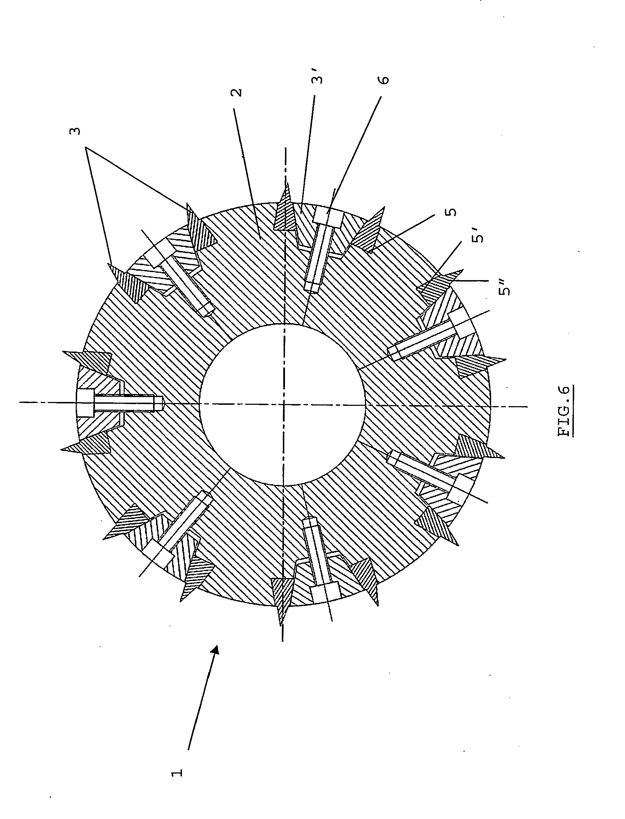

Selon une deuxième forme d'exécution préférée de l'invention représentée sur la figure 6, les rainures 5 sont de section trapézoïdale, la grande base du trapèze 5' étant plus proche de l'axe du mandrin 2 que la petite base 5". Ainsi, on renforce encore la sécurisation de fixation des lames 3, qui ont tendance à être éjectées lorsque le mandrin est en mouvement, suite à l'effet de la force centrifuge. Avantageusement, le mandrin 2 est alors dessiné pour recevoir des pièces de blocage amovibles 3', se présentant sous la forme de barrettes de même longueur que les lames 3, pouvant être disposées axialement le long des lames 3 et formant les rainures 5 lorsqu'elles sont en position. On fraise dans le mandrin des épaulements contre lesquels viennent se placer les lames 3. Les pièces de blocage 3' des lames comportent en outre des logements pour l'insertion de vis de fixation 6 sur le mandrin 2. Les vis de fixation ici peuvent être d'un type quelconque bien connu de l'homme de métier.

Dans les applications où le pas angulaire entre les lames peut être suffisamment élevé, on peut prévoir une pièce de blocage 3' pour la fixation de deux lames 3 adjacentes, comme représenté sur la figure 6.

L'invention présente les avantages suivants.

L'utilisation de carbure permet d'augmenter fortement la durée de vie des lames et donc de diminuer les temps d'arrêt en production.

Les lames sont interchangeables et amovibles. Du fait de la solidarisation individuelle de chaque lame au porte-lames, toute lame défectueuse peut être remplacée séparément, ce qui réduit considérablement le coût de réparation par rapport au dispositif monobloc. De plus, chaque outil peut être livré avec deux jeux de lames.

Le coût d'usinage d'un mandrin et de barreaux séparés est moindre que celui d'une pièce monobloc.

Le fait que les lames soient amovibles est pris en compte au niveau de l'effet de la force centrifuge par des mesures appropriées (couvercles de renforcement, rainures trapézoïdales se resserrant vers l'extérieur du mandrin).

## Revendications

1. Outil de coupe rotatif (1) présentant un mandrin de support cylindrique (2) et plusieurs lames individuelles (3) à arêtes tranchantes essentiellement radiales, affûtées hélicoïdalement et disposées régulièrement sur la surface extérieure du mandrin, chaque lame (3) comportant une base rectiligne (4) qui vient s'insérer dans une rainure (5) de même forme que ladite base, chaque lame individuelle (3) étant montée fixée mécaniquement au mandrin (2), **caractérisé en ce qu'**il comporte en outre deux couvercles (8, 9) fixés aux bases respectives (8', 9') du mandrin (2) pour renforcer la fixation des lames (3).

2. Outil selon la revendication 1, **caractérisé en ce que** la base (4) est essentiellement rectangulaire ou a la forme d'un parallélogramme et que la rainure (5) est respectivement de section rectangulaire ou en parallélogramme.

3. Outil selon la revendication 1 ou 2, **caractérisé en ce que** la fixation mécanique des lames (3) au mandrin est obtenue par vissage, serrage, brasage, frettage, sertissage ou collage.

4. Outil selon la revendication 1, 2 ou 3, **caractérisé en ce que** les lames sont montées vissées au mandrin (2) au moyen de vis à tête tronconique (6).

5. Outil selon la revendication 4, **caractérisé en ce que** le mandrin (2) présente des supports de lame (3') munis de rainures transversales (7) espacées régulièrement pour le positionnement des vis (6).

6. Outil selon la revendication 4 ou 5, **caractérisé en ce que** les vis (6) sont disposées régulièrement le long des lames (3), dans les rainures (7) des supports de lame (3'), de manière à les bloquer au moyen des têtes de vis dans les rainures rectilignes (5) correspondantes.

7. Outil selon la revendication 1, **caractérisé en ce que** les lames (3) s'étendent sur toute la longueur du mandrin (2) avec un profil tranchant monotone et régulier, dépourvu de dents sur toute la longueur des lames (3).

8. Outil selon la revendication 7, **caractérisé en ce que** les rainures (5) usinées dans le mandrin (2) sont inclinées d'un angle compris entre 0° et 15°, et de préférence entre 5° et 15°, par rapport à l'axe du mandrin.

9. Outil selon l'une quelconque des revendications précédentes, **caractérisé en ce que** les lames (3) sont en carbure cémenté à base de carbure de tungstène, en acier rapide ou à haute résistance, en diamant, en céramique ou en cermet, éventuellement revêtus de nitrure de titane, nitrure d'aluminium de titane ou carbonitrure de titane, nitrure de chrome, mono- ou multicouches.

10. Outil selon l'une quelconque des revendications précédentes, **caractérisé en ce que** le mandrin (2) est en acier inoxydable.

11. Outil selon l'une quelconque des revendications précédentes, **caractérisé en ce que** chaque lame (3) comporte au moins deux arêtes tranchantes parallèles à affûtage hélicoïdal.

12. Outil selon l'une quelconque des revendications précédentes, **caractérisé en ce que** les lames (3) ont au moins une extrémité tronconique (4') qui coopère, lors de la fixation, avec un cône inversé usiné dans le couvercle correspondant (8).

13. Outil selon l'une quelconque des revendications précédentes, **caractérisé en ce qu'**au moins un des deux couvercles (9) est fendu radialement et présente un orifice de vissage (10) entre deux fentes (11) quelconques, de manière telle qu'il y ait au maximum deux arêtes tranchantes entre deux fentes quelconques (11).

14. Outil selon la revendication 1, **caractérisé en ce que** la rainure (5) est de section trapézoïdale, la grande base (5') du trapèze étant plus proche de l'axe du mandrin (2) que la petite base (5").

15. Outil selon la revendication 14, **caractérisé en ce que** le mandrin (2) présente des pièces de blocage amovibles (3'), se présentant sous forme de barrettes ayant la même longueur que les lames (3), pouvant être disposées axialement le long des lames (3) et formant les rainures (5) lorsqu'elles sont en position, les pièces de blocage (3') comportant des logements pour l'insertion de vis de fixation (6) sur le mandrin (2).

16. Outil selon la revendication 15, **caractérisé en ce que** chaque pièce de blocage (3') est configurée pour la fixation de deux lames (3) adjacentes.

17. Procédé de fabrication d'un outil de coupe rotatif selon l'une quelconque des revendications précédentes, **caractérisé** au moins par les étapes successives suivantes :
- on usine des ébauches de lames à base rectiligne (4) ;
- on positionne les ébauches de lames à base rectiligne (4) dans les rainures (5) correspondantes usinées dans le mandrin (2) ;
- on fixe mécaniquement les ébauches de lames au mandrin (2), de préférence au moyen de vis à tête tronconique (6), ainsi que les couvercles (8, 9) ;
- on usine les ébauches de lames pour obtenir des lames finies (3) dont l'affûtage hélicoïdal satisfait à des tolérances globales prédéterminées de l'outil de coupe.

## Claims

1. Rotary cutting tool (1) with a cylindrical supporting spindle (2) and several individual blades (3) with essentially radial cutting edges, helically ground and set at regular intervals around the outer surface of the spindle, each blade (3) comprising a rectilinear base (4) which inserts into a slot (5) of the same shape as said base, each individual blade (3) being mechanically fixed to the spindle (2), **characterized in that** it also comprises two covers (8, 9) fixed to the respective bases (8', 9') of the spindle (2) so as to reinforce the fixing of the blades (3).

2. Tool as in Claim 1, **characterized in that** the base (4) is essentially rectangular or is shaped like a parallelogram and that the slot (5) has respectively a rectangular or parallelogram-shaped cross-section.

3. Tool as in Claim 1 or Claim 2, **characterized in that** the mechanical fixing of the blades (3) to the spindle is achieved by screwing, tightening, brazing, shrinking, crimping or sticking.

4. Tool as in Claim 1, 2 or 3, **characterized in that** the blades are attached by screwing to the spindle (2) by means of cone-headed screws (6).

5. Tool as in Claim 4, **characterized in that** the spindle (2) shows blade supports (3') equipped with transverse slots (7) evenly spaced for the positioning of the screws (6).

6. Tool as in Claim 4 or Claim 5, **characterized in that** the screws (6) are set at regular intervals along the blades (3), in the slots (7) of the blade supports (3'), in such a way as to lock them by means of the screw heads into the corresponding rectilinear slots (5).

7. Tool as in Claim 1, **characterized in that** the blades (3) extend along the entire length of the spindle (2) with a constant and regular cutting profile without any teeth anywhere on the whole length of the blades (3).

8. Tool as in Claim 7, **characterized in that** the slots (5) machined into the spindle (2) are set at an angle of between 0° and 15° and preferably between 5° and 15° relative to the axis of the spindle.

9. Tool as in any of the above claims, **characterized in that** the blades (3) are made of cemented carbide based on tungsten carbide, high-speed or high-strength steel, diamond, ceramics or cermet, possibly coated with mono- or multilayered titanium nitride, titanium aluminium nitride, titanium carbonitride or chromium nitride.

10. Tool as in any of the above claims, **characterized in that** the spindle (2) is made of stainless steel.

11. Tool as in any of the above claims, **characterized in that** each blade (3) comprises at least two cutting edges parallel to the helical grinding.

12. Tool as in any of the above claims, **characterized in that** the blades (3) have at least one cone-headed end (4') which fits, during the fixation, into an inverted taper machined into the corresponding cover (8).

13. Tool as in any of the above claims, **characterized in that** at least one of the two covers (9) is split radially and shows a screw hole (10) between any two splits (11) in such a way that there is a maximum of two cutting edges between any two splits (11).

14. Tool as in Claim 1, **characterized in that** the slot (5) has a trapezoidal cross-section, the wide base (5') of the trapeze being closer to the axis of the spindle (2) than the narrow base (5").

15. Tool as in Claim 14, **characterized in that** the spindle (2) shows movable locking parts (3') in the form of rods of the same length as the blades (3), which can be set axially along the blades (3) and form slots (5) when they are in position, the locking parts (3') comprising seats for inserting the fixing screws (6) on the spindle (2).

16. Tool as in Claim 15, **characterized in that** each locking part (3') is configured for the fixing of two adjacent blades (3).

17. Method of making a rotary cutting tool as in any of the above claims, **characterized** at least by the following successive stages:
- blanks of blades with a rectilinear base (4) are machined;
- the blanks of the blades with a rectilinear base (4) are positioned in the corresponding slots (5) machined into the spindle (2);
- the blanks of the blades are mechanically fixed to the spindle (2), preferably by means of cone-headed screws (6), as well as the covers (8,9);
- the blanks of the blades are machined so as to obtain finished blades (3) whose helical grinding meets the predetermined global tolerances of the cutting tool.

## Patentansprüche

1. Rotierendes Schnittwerkzeug (1), das über eine zylindrische Spindel als Träger (2) und mehrere einzelne Klingen (3) mit im Wesentlichen radialen, schneidenden Kanten verfügt, die spiralenförmig geschärft und in regelmäßigen Abständen auf der Außenfläche der Spindel angeordnet sind, wobei jede Klinge (3) hierbei eine geradlinige Grundfläche (4), welche sich in eine gleichförmige Rille (5) der besagten Grundfläche einfügt, umfasst; jede einzelne Klinge (3) ist mechanisch fest auf der Spindel (2) montiert, und **dadurch gekennzeichnet, dass** es darüber hinaus zwei Deckel (8, 9) umfasst, die an den jeweiligen Grundflächen (8', 9') der Spindel (2) befestigt sind, um die Befestigung der Klingen (3) zu verstärken.

2. Werkzeug gemäß dem Anspruch 1, **dadurch gekennzeichnet, dass** diese Grundfläche (4) im Wesentlichen rechteckig ist oder die Form eines Parallelogramms hat und dass die Rille (5) jeweils den gleichen rechteckigen oder parallelogrammförmigen Querschnitt hat.

3. Werkzeug gemäß den Ansprüchen 1 bzw. 2, **dadurch gekennzeichnet, dass** die mechanische Befestigung der Klingen (3) auf der Spindel durch Verschraubung, Einspannen, Versteifen, Bördeln oder Verkleben erfolgt.

4. Werkzeug gemäß den Ansprüchen 1, 2 bzw. 3, **dadurch gekennzeichnet, dass** diese Klingen mithilfe von Flachkopfschrauben (6) an der Spindel (2) verschraubt werden.

5. Werkzeug gemäß dem Anspruch 4, **dadurch gekennzeichnet, dass** die Spindel (2) über Klingenaufnahmen (3') verfügt, die mit Querrillen (7) in regelmäßigen Abständen für die Platzierung der Schrauben (6) ausgestattet sind.

6. Werkzeug gemäß den Ansprüchen 4 bzw. 5, **dadurch gekennzeichnet, dass** die Schrauben (6) in regelmäßigen Abständen entlang der Klingen (3) in den Rillen (7) der Klingenaufnahmen (3') in einer Weise angeordnet sind, dass diese Klingen mithilfe der Schraubenköpfe in den entsprechenden geradlinigen Rillen (5) blockiert werden.

7. Werkzeug gemäß dem Anspruch 1, **dadurch gekennzeichnet, dass** die Klingen (3) sich auf der gesamten Länge der Spindel (2) mit einem monoton und regelmäßig schneidendem Profil erstrecken und das keine Zähne auf der gesamten Länge der Klingen (3) aufweist.

8. Werkzeug gemäß dem Anspruch 7, **dadurch gekennzeichnet, dass** die in der Spindel (2) eingefügten Rillen (5) um einen Winkel zwischen 0° und 15° und vorzugsweise zwischen 5° und 15° im Verhältnis zur Achse der Spindel geneigt sind.

9. Werkzeug gemäß irgendeinem der vorherigen Ansprüche, **dadurch gekennzeichnet, dass** die Klingen (3) aus gesintertem Wolframcarbid, aus Schnellstahl bzw. hochfestem Stahl, aus Diamant, aus Keramik oder aus Metall-Keramik-Verbundstoff bestehen und eventuell mit Titannitrid, Titan-Aluminiumnitrid oder Titan-Carbonitrit, Chromnitrit in einer oder mehreren Schichten beschichtet sind.

10. Werkzeug gemäß irgendeinem der vorherigen Ansprüche, **dadurch gekennzeichnet, dass** die Spindel (2) aus rostfreiem Stahl besteht.

11. Werkzeug gemäß irgendeinem der vorherigen Ansprüche, **dadurch gekennzeichnet, dass** jede Klinge (3) mindestens zwei parallele schneidende Kanten durch spiralenförmiges Schleifen umfasst.

12. Werkzeug gemäß irgendeinem der vorherigen Ansprüche, **dadurch gekennzeichnet, dass** die Klingen (3) über mindestens ein kegelstumpfförmige Ende (4') verfügen, das bei der Befestigung mit einem umgekehrten Kegel im entsprechenden Deckel (8) zusammenwirkt.

13. Werkzeug gemäß irgendeinem der vorherigen Ansprüche, **dadurch gekennzeichnet, dass** mindestens einer der beiden Deckel (9) radial geschlitzt ist und eine Verschraubungsöffnung (10) zwischen zwei beliebigen Schlitzen (11) in einer Weise aufweist, dass zwischen den beiden beliebigen Schlitzen (11) mindestens zwei schneidende Kanten geschaffen werden.

14. Werkzeug gemäß dem Anspruch 1, **dadurch gekennzeichnet, dass** die Rille (5) über einen trapezförmigen Querschnitt verfügt; die große Grundfläche (5') des Trapezes ist hierbei näher an der Achse der Spindel (2) als die kleine Grundfläche (5").

15. Werkzeug gemäß dem Anspruch 14, **dadurch gekennzeichnet, dass** die Spindel (2) über unbewegliche Blockierstücke (3') verfügt, die die Form von Stegen in der gleichen Länge der Klingen (3) haben und welche axial entlang der Klingen (3) angeordnet werden können und die Rillen(5) bilden, wenn sie sich in ihrer Position befinden,; die Blockierstücke (3') umfassen Aussparungen für das Einsetzen der Befestigungsschrauben (6) an der Spindel (2).

16. Werkzeug gemäß dem Anspruch 15, **dadurch gekennzeichnet, dass** jedes Blockierstück (3') für die Befestigung der beiden angrenzenden Klingen (3) ausgelegt ist.

17. Herstellungsverfahren für ein rotierendes Schnittwerkzeug gemäß irgendeinem der vorherigen Ansprüche, mindestens durch die nachstehenden aufeinander folgenden Schritte **gekennzeichnet**:
- Fertigung eines Klingenrohlings mit geradliniger Grundfläche (4);
- Platzierung der Klingenrohlinge mit geradliniger Grundform (4) in den entsprechenden Rillen (5), die in der Spindel (2) eingebracht wurden;
- mechanische Befestigung der Klingenrohlinge an der Spindel (2), vorzugsweise mit Flachkopfschrauben (6), sowie gleichermaßen mechanische Befestigung der Deckel (8, 9);
- Bearbeitung der Klingenrohlinge zum Erhalt der fertigen Klingen (3), deren spiralenförmiges Schärfen den gesamten vorher festgelegten Toleranzen des Schnittwerkzeugs entspricht.
